# EUROPEAN PATENT APPLICATION

(11) **EP 4 557 178 A1**
(43) Date of publication of application: **21.05.2025**
(21) Application number: 24208818.5
(22) Date of filing: 25.10.2024
(51) Int. Cl.: G06N 5/022, G06N 20/00, G06N 3/084

(54) **REUSE OF DATA FOR TRAINING MACHINE LEARNING MODELS**

(30) Priority: 14.11.2023 FI 20236262
(71) Applicant: Nokia Technologies Oy, 02610 Espoo (FI)
(72) Inventor: CHOI, Ryuhaerang, Cambridge (GB); CHATTERJEE, Soumyajit, Cambridge (GB); SPATHIS, Dimitrios, Cambridge (GB); MALEKZADEH, Mohammad, Cambridge (GB)
(74) Representative: Nokia EPO representatives

(57) **Abstract**

Example embodiments may relate to systems, methods and/or computer programs for reusing data for training machine learning models. In an example, an apparatus comprises means for receiving a request to collect new user data for training a machine learning model associated with an application. The apparatus may also comprise means for identifying existing stored data suitable for training the machine learning model based upon an ontology. The apparatus may also comprise means for providing access to the identified existing stored data in response to identifying that the data is suitable for training the machine learning model.

## Description

### Field

Example embodiments may relate to systems, methods and/or computer programs for reusing data for training machine learning models.

### Background

Software applications are increasingly making use of machine learning models. These models may need fine-tuning to a specific user to improve performance. For example, medical related applications may need to obtain user data to establish a baseline for the user or an AI assistant may collect user speech data to adapt to the user's voice and speaking style to improve speech recognition performance for the user. With many applications collecting and storing user data for training their respective machine learning models, this increases the burden on the storage requirements of devices. Increased storage requirements may cause difficulties for devices with limited storage capacities such as smartphones.

### Summary

The scope of protection sought for various embodiments of the invention is set out by the independent claims. The embodiments and features, if any, described in this specification that do not fall under the scope of the independent claims are to be interpreted as examples useful for understanding various embodiments of the invention.

According to a first aspect, there is described an apparatus comprising means for: receiving a request to collect new user data for training a machine learning model associated with an application; means for identifying existing stored data suitable for training the machine learning model based upon an ontology; and means for providing access to the identified existing stored data in response to identifying that the data is suitable for training the machine learning model.

In some examples, the request may further comprise a modality of the new user data. In some examples, the means for identifying the existing stored data may further comprise means for identifying the existing stored data based upon the modality.

In some examples, the request may further comprise data indicating one or more labels for training the machine learning model. In some examples, the means for identifying the existing stored data may further comprise means for determining one or more terms related to the one or more labels based upon the ontology; and
means for identifying the existing stored data having metadata comprising at least one of the one or more related terms.

The apparatus may further comprise means for processing the identified existing stored data to enhance the suitability of the existing stored data for training the machine learning model. In some examples, the means for providing access to the identified existing stored data may comprise means for providing access to a processed version of the existing stored data.

In some examples, the means for processing the identified existing stored data may comprise means for applying signal processing to the identified existing stored data.

The apparatus may further comprise means for generating labels for the identified existing stored data for training the machine learning model associated with the application.

In some examples, the means for generating labels may comprise: means for generating one or more hidden tasks from the identified existing stored data; and
means for labelling the identified existing stored data based upon the one or more hidden tasks.

In some examples, the means for generating the one or more hidden tasks from the identified existing stored data may comprise means for generating the one or more hidden tasks from the identified existing stored data based upon optimizing a labelling function and a plurality of machine learning models configured to perform a hidden task, the optimization based upon an agreement score between the output of the plurality of machine learning models when performing the hidden task.

In some examples, the plurality of machine learning models have the same architecture but different starting parameter values.

In some examples, a hidden task is a random classification task.

In some examples, the means for labelling the identified existing stored data based upon the one or more hidden tasks may comprise means for labelling the existing stored data based upon an active learning model.

In some examples, the means for labelling the identified existing stored data based upon the one or more hidden tasks may comprise at least one of the following: means for providing a subset of the existing stored data for the one or more hidden tasks to a user for manual labelling; means for receiving a manual labelling of the subset of the existing stored data from a user; or means for automatically labelling the remaining existing stored data based upon the received manual labelling.

The apparatus may further comprise means for modifying the metadata of the identified existing stored data to indicate re-usability of the data for training machine learning models.

In some examples, means for modifying the metadata of the identified existing stored data to indicate the re-usability of the data for training machine learning models may comprise means for modifying the metadata to include the labels determined for the data.

The apparatus may further comprise means for training the machine learning model based upon the identified existing stored data.

In some examples, the ontology may have been generated based upon the co-occurrence of labels in data items of one or more datasets. In some examples, the apparatus may further comprise means for generating the ontology.

According to a second aspect, there is described a method comprising: receiving, by an apparatus, a request from an application to collect new user data for training a machine learning model associated with the application; identifying, by the apparatus, existing stored data suitable for training the machine learning model based upon an ontology; and providing, by the apparatus, access to the identified existing stored data in response to the request by the application.

In some examples, the request may further comprise a modality of the user data. In some examples, identifying the existing stored data may further comprise identifying existing stored data based upon the modality.

In some examples, the request may further comprise data indicating one or more labels for training the machine learning model. In some examples, identifying the existing stored data may further comprise determining one or more terms related to the one or more labels based upon the ontology; and identifying existing stored data having metadata comprising at least one of the one or more related terms.

The method may further comprise processing the identified existing stored data to enhance the suitability of the existing stored data for training the machine learning model. In some examples, providing access to the identified existing stored data may comprise providing access to a processed version of the existing stored data.

In some examples, processing the identified existing stored data may comprise applying signal processing to the identified existing stored data.

The method may further comprise generating labels for the identified existing stored data for training the machine learning model associated with the application.

In some examples, generating labels may comprise: generating one or more hidden tasks from the identified existing stored data; and labelling the identified existing stored data based upon the one or more hidden tasks.

In some examples, generating the one or more hidden tasks from the identified existing stored data may comprise generating the one or more hidden tasks from the identified existing stored data based upon optimizing a labelling function and a plurality of machine learning models configured to perform a hidden task, the optimization based upon an agreement score between the output of the plurality of machine learning models when performing the hidden task.

In some examples, the plurality of machine learning models have the same architecture but different starting parameter values.

In some examples, a hidden task is a random classification task.

In some examples, labelling the identified existing stored data based upon the one or more hidden tasks may comprise labelling the existing stored data based upon an active learning model.

In some examples, labelling the identified existing stored data based upon the one or more hidden tasks may comprise at least one of the following: providing a subset of the existing stored data for the one or more hidden tasks to a user for manual labelling; receiving a manual labelling of the subset of the existing stored data from a user; or automatically labelling the remaining existing stored data based upon the received manual labelling.

The method may further comprise modifying the metadata of the identified existing stored data to indicate re-usability of the data for training machine learning models.

In some examples, modifying the metadata of the identified existing stored data to indicate re-usability of the data for training machine learning models may comprise modifying the metadata to include the labels determined for the data.

The method may further comprise training the machine learning model based upon the identified existing stored data.

In some examples, the ontology may have been generated based upon the co-occurrence of labels in data items of one or more datasets. In some examples, the method may further comprise generating the ontology.

According to a third aspect, there is provided a computer program product comprising a set of instructions which, when executed on an apparatus, is configured to cause the apparatus to carry out the method of any preceding method definition.

According to a fourth aspect, there is provided a (non-transitory) computer readable medium comprising program instructions that, when executed by an apparatus, causes the apparatus to perform at least the following: receiving, by the apparatus, a request from an application to collect new user data for training a machine learning model associated with the application; identifying, by the apparatus, existing stored data suitable for training the machine learning model based upon an ontology; and providing, by the apparatus, access to the identified existing stored data in response to the request by the application.

The program instructions of the third aspect may also perform operations according to any preceding method definition of the second aspect.

According to a fifth aspect, there is provided an apparatus comprising: one or more processors; and at least one memory storing instructions that, when executed by the one or more processors, causes the apparatus at least to receive a request from an application to collect new user data for training a machine learning model associated with the application; identify existing stored data suitable for training the machine learning model based upon an ontology; and provide access to the identified existing stored data in response to the request by the application.

The computer program code of the fifth aspect may also perform operations according to any preceding method definition of the second aspect.

### Brief Description of the Drawings

Example embodiments will now be described by way of non-limiting example, with reference to the accompanying drawings, in which:
FIG. 1 is a block diagram of an apparatus which may be useful for understanding example embodiments;
FIG. 2 is a flow diagram showing operations according to one or more example embodiments;
FIG. 3 is a block diagram showing operations according to one or more example embodiments;
FIG. 4 is a schematic illustration of part of an ontology which may be useful for understanding example embodiments;
FIG. 5 is a flow diagram showing operations according to one or more example embodiments;
FIG. 6 is a flow diagram showing operations according to one or more example embodiments;
FIG. 7 is a flow diagram showing operations according to one or more example embodiments;
FIG. 8 is a flow diagram showing operations according to one or more example embodiments;
FIG. 9 is a block diagram of a federated learning system which may be useful for understanding example embodiments;
FIG. 10 is a block diagram of an apparatus that may be configured according to one or more example embodiments;
FIG. 11 is a view of an example medium that may store instructions which, when executed by an apparatus, may cause the apparatus to carry out one or more example embodiments.

### Detailed Description

Example embodiments relate to an apparatus, method and computer program relating to the reuse of existing stored data for training machine learning (ML) models.

The term "label" as used herein may refer to any form of descriptor or tag used to describe a particular data item. It is not intended for the term "label" to imply a limitation to supervised learning or be limited to labels in the sense of labels for supervised learning only.

The term "request" as used herein may include a single data transmission event or a plurality of data transmission events. A request may comprise all data transmissions necessary for an apparatus to carry out a requested operation and such transmissions may occur in a plurality of transmissions over a period of time.

Software applications are increasingly making use of machine learning models. These models may need fine-tuning to a specific user to improve performance. For example, medical related applications may need to obtain user data to establish a baseline for the user or an AI (Artificial Intelligence) assistant may collect user speech data to adapt to the user's voice and speaking style to improve speech recognition performance for the user. With many applications collecting and storing user data for training their respective machine learning models, it is possible that data that has been collected previously for one application may be re-used for training the machine learning models of another application. Example embodiments provide means for identifying existing stored data suitable for training machine learning models to avoid the need for collecting and storing further user data. In this way, storage requirements are reduced. This is particularly useful for devices with limited storage capacities such as smartphones and other portable devices.

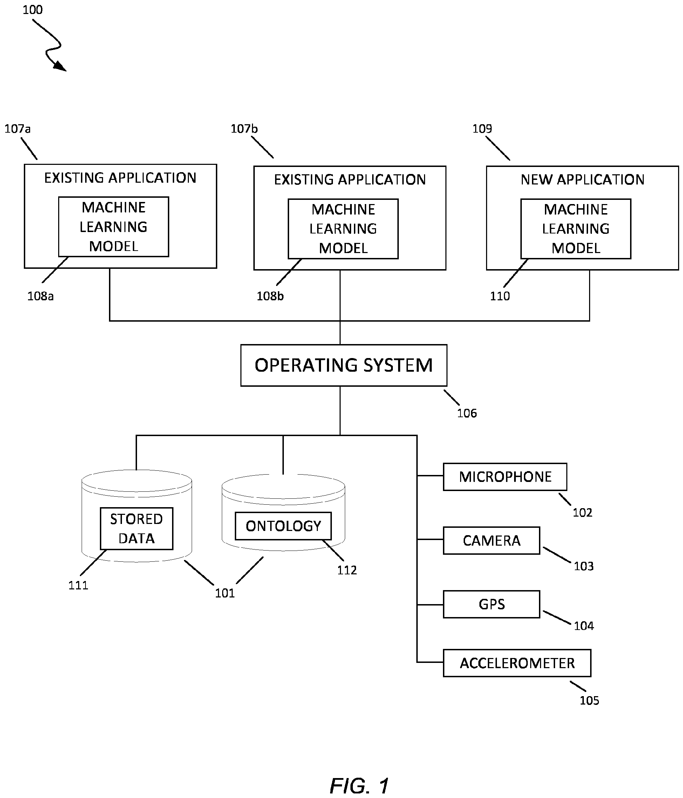

FIG. 1 is a block diagram showing an apparatus, in this case, a device 100 which may be useful for understanding example embodiments. The device 100 comprises one or more storage media 101 and one or more sensors which may be used to collect user data. For example, the device 100 comprises a microphone 102, a camera 103, a GNSS (global navigation satellite system) sensor, such as a GPS (global positioning system) sensor 104, and/or an accelerometer 105. It will be appreciated that the device may comprise other sensors or certain sensors may be omitted as deemed appropriate by a person skilled in the art. For example, other potential sensors comprise at least one of the following: temperature sensor, humidity sensor, proximity sensor, heart rate sensor, blood pressure sensor, motion sensor, inertial measurement sensor, or position sensor and so on.

The device 100 further comprises an operating system 106 which may be configured to control access to the hardware resources of the device such as the one or more storage media 101 and the one or more sensors. The device 100 may further comprise one or more existing applications. For example, device 100 comprises two existing applications 107a and 107b, though it will be appreciated that a device may comprise a greater or fewer number of applications. The existing applications 107a and 107b each comprise a machine learning model 108a and 108b. Both existing applications 107a and 107b have or have access to previously collected data for training their respective machine learning models. The previously collected data 111 is stored on the storage media 101 of the device 100.

The device 100 further comprises a "new" application 109. The new application 109 may be installed by a user of the device 100 for example. The new application 109 also comprises a machine learning model 110 which requires training on user data. The new application 109 is configured to request collection of new user data for training its machine learning model 110. For example, the request may comprise a request to access the one or more sensors of the device 100. The request may be sent to and handled by the operating system 106.

The device 100 is configured to receive the request from the new application 109. However, instead of immediately granting the request, the device 100 is configured to determine whether any of the existing stored data 111 collected previously by the existing applications 107a, 107b would be suitable for training the machine learning model 110 associated with the new application 109. In this regard, the device 100 is configured to identify, for example, the existing stored data 111 suitable for training the machine learning model 110 based upon an ontology 112. This process is described in more detail below. The existing stored data 111 may also comprise existing data stored on the device 100, which data was not obtained for the specific purposes of training machine learning models. In addition, the existing stored data 111 need not have been collected for the same precise task as would be performed by the machine learning model 110 of the new application 109.

If suitable existing data is identified, the device 100 is configured to provide access to the identified existing data in response to the request by the new application 109. The new application 109 may then proceed to train the machine learning model 110 using the identified existing data. Alternatively, if no suitable existing data is identified, the device 100 may be configured to allow the request by new application 109 to collect new user data and may allow access to the one or more sensors to do so.

A user may however choose to opt-out of any data collection processes and searching of stored data or alternatively, active permission may be sought from the user before carrying out any such activities by the device.

Example applications may include medical related applications such as cough analysis to predict potential illnesses or analysis of breathing to determine any abnormalities from a captured audio, visual and/or other sensor signal. Other example applications include speech recognition, for instance, to recognise voice commands to control/operate the device. Another example application may include face recognition, for instance to verify a user to allow access to the device. Embodiments may also be applied in industrial settings. For example, applications may include detection of machine malfunctions and environmental hazard detection from audio, visual and/or other sensor inputs. More generally, example applications may relate to any classification or detection task, for example to classify inputs received from the one or more sensors of the device 100, into a one or more appropriate classes or to localize particular entities of interest within the input signal.

The device 100 may be any suitable form of computing device. For example, the device 100 may be a wireless communication device, smartphone, desktop computer, laptop, tablet computer, smart watch, smart ring, digital assistant, AR (augmented reality) classes, VR (virtual reality) headset, television, over the top (OTT) device, vehicle, or some form of internet of things (IoT) device, or any combination thereof.

Though not shown in FIG. 1, the device 100 comprises one or more processors, e.g. including a central processing unit (CPU), one or more memories, such as main memory or random access memory (RAM), and optionally one or more additional hardware units such as one or more floating-point units (FPUs), graphics processing units (GPUs), tensor processing units (TPUs) and digital signal processors (DSPs).

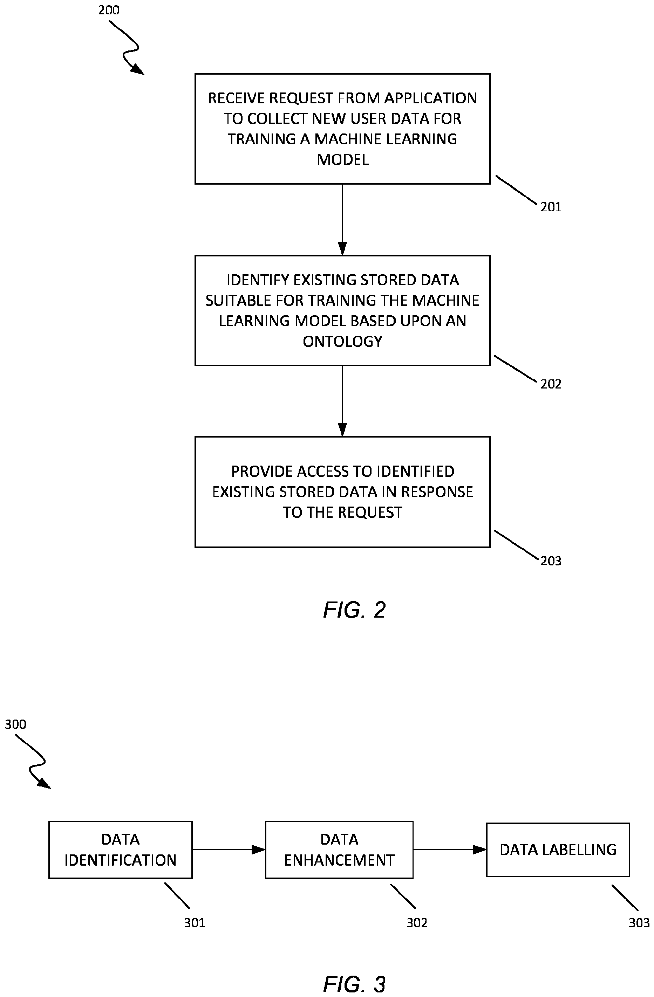

FIG. 2 is a flow diagram of operations 200 that may be performed, e.g. by an apparatus, according to one or more example embodiments. For example, the operations may be performed by the device 100 of FIG. 1. The operations may be processing operations performed by hardware, software, firmware or a combination thereof. The shown order is not necessarily indicative of the order of processing. The apparatus may comprise, or at least include, one or more means for performing the operations, wherein the means may comprise one or more processors, controllers or circuitry which, when executing computer-readable instructions, may cause said operations to be performed.

A first operation 201 comprises receiving a request from an application to collect new user data for training a machine learning model associated with the application. For example, the application may generate the request when it is newly installed on the apparatus.

A second operation 202 comprises identifying existing stored data, for example, in the device 100, suitable for training the machine learning model based upon an ontology. As discussed above, the existing stored data may have been collected previously by one or more existing applications for the purpose of training machine learning models associated with those one or more existing applications. The existing machine learning models need not perform the same task as the machine learning model associated with the requesting application. In addition, or alternatively, the existing stored data may comprise existing stored data that was not obtained for the specific purposes of training the one or more machine learning models. The identification of suitable existing data is described in more detail below.

A third operation 203 comprises providing access to the identified existing stored data in response to the request by the application. This may be instead of allowing the application to collect new user data. In this way, existing stored data may be used for training machine learning models rather than collecting and storing new user data which would reduce the amount of available storage for the apparatus and other applications.

FIG. 3 is a block diagram of an example pipeline or process 300 for processing existing stored data for training machine learning models. The operations of the pipeline 300 may be performed, e.g. by an apparatus, according to one or more example embodiments. For example, the operations may be performed by the device 100 of FIG. 1. The operations may be processing operations performed by hardware, software, firmware or a combination thereof. The shown order is not necessarily indicative of the order of processing. The apparatus may comprise, or at least include, one or more means for performing the operations, wherein the means may comprise one or more processors, circuitry or controllers which, when executing computer-readable instructions, may cause said operations to be performed.

The operations of the pipeline 300 may be carried out in response to receiving a request to collect data, such as new data, for training a machine learning model as discussed above. The pipeline 300 comprises a first data identification stage 301. In this stage, stored data that is potentially suitable for training the machine learning model is identified based upon an ontology as discussed in further detail below.

The second stage 302 of the pipeline 300 comprises data enhancement. In this stage, the identified stored data may be processed to enhance the suitability of the data for training the machine learning model. Example operations in this second stage are described in more detail below.

A third stage 303 of the pipeline 300 comprises data labelling. In this stage, the identified stored data may be labelled according to the requirements of the machine learning model. Example operations in this third stage are described in more detail below.

It will be appreciated that data enhancement and data labelling stages may be optional and may be omitted depending on the nature of the machine learning model. For example, an unsupervised learning model may not require data labelling or data may not require enhancement if it was collected for the same or similar purposes.

Example operations for identifying existing stored data suitable for training a machine learning model will now be described in more detail. As discussed above, the existing stored data is identified based upon an ontology. In general, an ontology is a graph showing relationships between concepts and entities. An ontology may be generated or received using publicly available datasets such as, Gemmeke, Jort F., et al. "Audio set: An ontology and human-labeled dataset for audio events." in 2017 IEEE international conference on acoustics, speech and signal processing (ICASSP), pp. 776-780. IEEE, 2017. In general, the Audio Set dataset comprises labelled sound events of Youtube videos.

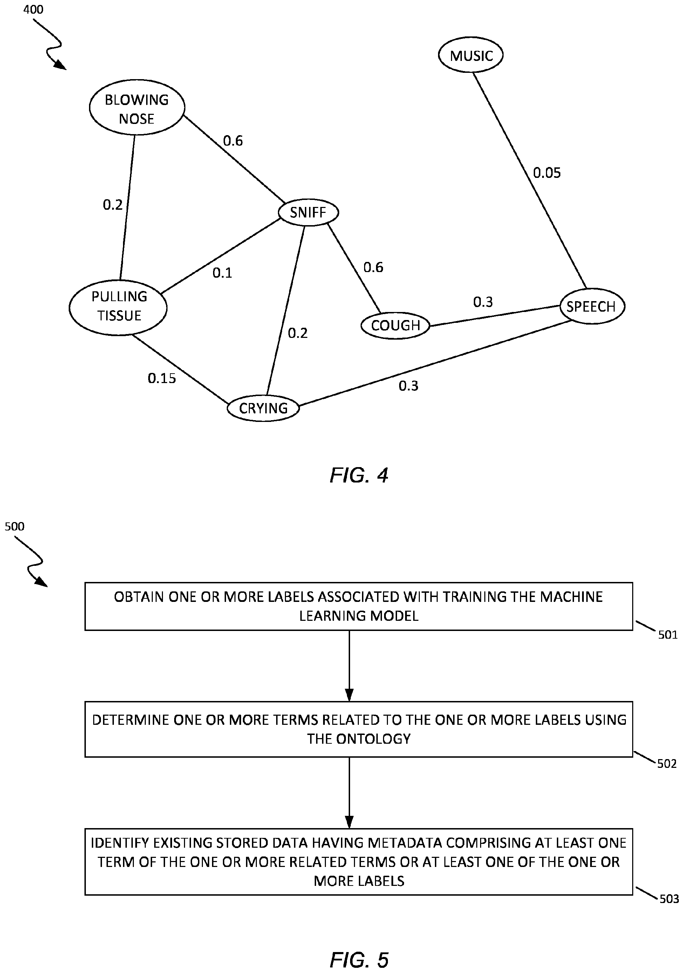

FIG. 4 shows a portion of an ontology 400 generated from the Audio Set dataset. The ontology 400 comprises a set of nodes, each node representing a concept or action, e.g. music, speech, crying, cough etc, (referred to as a "term" hereinafter). The ontology 400 further comprises a set of edges connecting certain nodes of the graph to represent a relationship between the concepts/actions/terms represented by the nodes. Each edge is also associated with a probability that indicates the likelihood that the nodes are linked. The probabilities may be generated based upon the co-occurrence of labels for each data item in the dataset. The probabilities may provide an indication of the likelihood that a data item having one particular node label will be relevant for a task having the linked node label.

FIG. 5 is a flowchart showing example operations for identifying existing stored data suitable for training a machine learning model based upon an ontology.

A first operation 501 may comprise obtaining one or more labels associated with training the machine learning model. Such labels may be included in the request to collect new user data made by the associated application. The one or more labels may also be provided in a separate transmission, though for purposes of this disclosure, a separate transmission will be considered as part of one related request. In addition, or alternatively, any metadata relating to the application itself, such as a title, description, or associated keywords may also be used.

A second operation 502 may comprise determining one or more terms related to the one or more labels using the ontology. This may comprise searching the ontology for each of the one or more labels and providing the terms represented by linked nodes. The terms may be those that have a direct connection to a label node or may be a term having an indirect connection of a threshold maximum degree. Where the ontology comprises probabilities indicating the likelihood that two nodes are related, a threshold may be used to determine whether or not to provide the term as a related term.

A third operation 503 may comprise identifying existing stored data having metadata comprising at least one term of the one or more related terms or at least one of the one or more labels. The metadata may include a filename and/or file descriptor and/or any other appropriate metadata. In this regard, previously collected data may be stored with appropriate labels in the file descriptor field of the data file in order to promote reusability and aid in searches for related data.

In addition, or alternatively, to using labels, the existing stored data may be identified based upon the modality of the data, e.g., the type of the data or the type of the content the data, required for training the machine learning model. For example, the modality may be audio data, or the modality may be more specific such as speech data or music data. In another example, the modality may be image data or video data or audio-visual data. In a further example, the modality may be location data or other sensor data. The required modality may be included in the request made by the application. Thus, in some embodiments, the existing stored data is also identified based upon the modality and provides for an additional filter for identifying suitable existing data for training the machine learning model. In some embodiments, data having the required modality may be identified first prior to processing using the ontology. Alternatively, the modality may be used to filter the data identified using the ontology.

Referring back to FIG. 3, the data enhancement stage 302 will now be described in further detail. As discussed above, the identified existing stored data may be processed to enhance the suitability of the data for training the machine learning model. In some embodiments, the processing comprises applying signal processing to the identified existing stored data. Typically, devices such as smartphones have hardware processing units that are capable of efficiently performing signal processing operations such as a digital signal processor. By using signal processing techniques, such hardware can be leveraged to improve efficiency and reduce latency.

Examples of particular enhancements will now be described with time-series data. In one example, if the data required is speech data, signal processing may be applied to the identified audio data to enhance components associated with human speech in the audio signal and/or to de-emphasize components relating to background noise or other sounds. In another example, if the application is a medical application for the analysis of breathing, signal processing may be used to enhance the frequencies related to breathing. In a further example, the identified existing stored data may comprise metadata indicating the presence of unrelated sounds. Signal processing methods may be used to filter or deemphasize such sounds. Signal processing methods may also be applied to any other time-series data, such as sensor data. Example signal processing operations that may be performed include Fourier transformation, wavelet analysis, change point detection, filtering, statistical enhancements amongst others.

For image data, example operations may also include cropping and scaling or any other appropriate image transformations. In one example, the purpose of the machine learning model may be to recognize a user's face. A general face detection model may be used to identify potential faces in existing image data and the data cropped to remove the non-facial elements of images. More generally, an object detector may be used to detect potential objects in an image and cropped to remove background.

Whilst some specific examples and modalities have been discussed above, it will be appreciated that embodiments are not limited to such examples and modalities. The data enhancement operations may be dependent on the particular application context and particular content of the data. The particular enhancement operations may be pre-determined and may be associated with certain terms in the ontology or associated with certain applications. A list of enhancement operations may be updated from time-to-time to encompass new applications. For example, updates may be provided through operating system updates. In addition, or alternatively, an application may also specify the enhancement operations to be performed, for example in the request made by the application.

Access to the processed/enhanced versions of the identified existing stored data may be provided in response to the request by the application to collect user data.

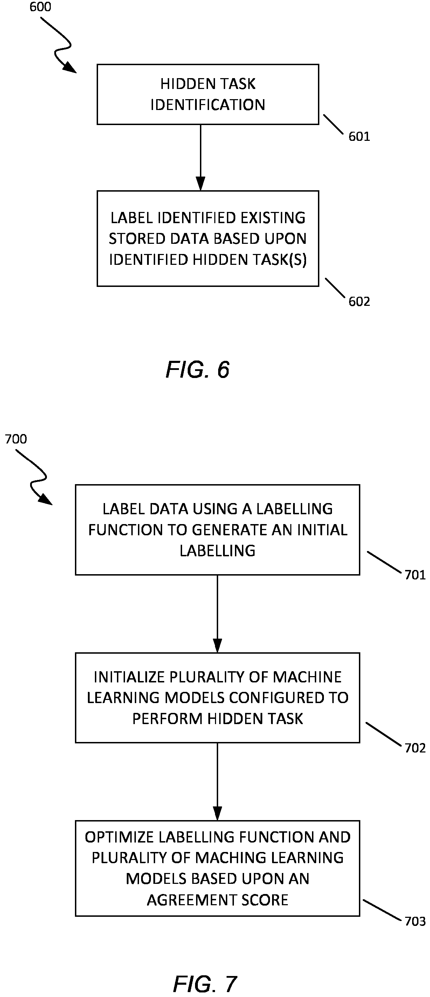

Referring back to FIG. 3, the data labelling stage 303 will now be described in further detail. As discussed above, in this stage, the identified stored data may be labelled according to the requirements of the machine learning model which may be included in the request by the application. FIG. 6 is a flow diagram 600 showing example operations of this stage.

A first operation 601 may comprise hidden task identification from the identified existing stored data. In general, a task may be considered as some assignment or division of the data according to one or more classes. The identified existing stored data may be stored metadata comprising with one or more labels. These labels provide known tasks or splits of the data. A hidden task may be a split of the data where the differences and labels may not be initially known. As such, the aim of hidden task identification may be to determine one or more splits of the identified existing stored data. Further details regarding hidden task identification are provided below with reference to FIG. 7.

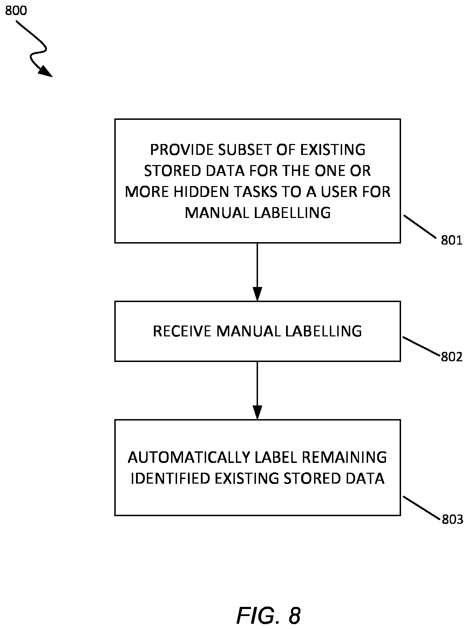

A second operation 602 may comprise labelling the identified existing stored data based upon the identified one or more hidden tasks from the first operation 601. As discussed, the one or more hidden tasks may provide one or more splits of the identified existing stored data. Such data splits may be used for initializing a process for labelling the existing data for training the machine learning model associated with the new application. For example, the labelling may be performed based upon an active learning model. Further details are provided below with reference to FIG. 8.

Referring now to FIG. 7, example operations 700 for hidden task identification will now be described. As an example only, a hidden task is considered to be a binary classification of data into a first class and a second class. It will be appreciated however that other tasks may be used as deemed appropriate by a person skilled in the art.

A first operation 701 may comprise labelling the data using a labelling function to generate an initial labelling of the data. That is, a function may be used to assign each data item to the first class or the second class. The labelling function may comprise adjustable parameters, the values of which may be initialized randomly. Thus, the initial labelling of the data may be a random assignment and the hidden task may be a random classification task.

A second operation 702 may comprise initializing a plurality of machine learning models configured to perform the hidden task. For example, if the hidden task is binary classification, the machine learning models are configured to provide output for classifying input into the first class or the second class. The plurality of machine learning models may have the same architecture but different starting parameter values. The starting parameter values may be determined randomly. For example, it is possible to use the architecture of one of the machine learning models associated with an existing application. In one embodiment, two instances of the machine learning model may be created but with different parameter initializations.

A third operation 703 may comprise optimizing the labelling function and the plurality of machine learning models based upon an agreement score between the output of the plurality of machine learning models when performing the hidden task. For example, the agreement score may be based upon the number of identical outputs produced by the plurality of neural networks. When the agreement score is low, it is likely that the label assignments produced by the labelling function are not representative of any identifiable differences in the data and likely to still be random in nature. When the agreement score is high, it is likely that the labelling function has produced a split of the data that corresponds to some identifiable difference in the data. As such, by optimizing based upon an agreement score, a split of the data corresponding to a potential identifiable difference in the data may be generated. The process may be repeated to identify further potential data splits/hidden tasks and these may be used to initialize the process for labelling the existing data for training the machine learning model associated with the new application.

The optimization based upon an agreement score may be performed using any appropriate optimization method. For example, where the plurality of machine learning models are neural networks, stochastic gradient descent and backpropagation may be used. The optimization may alternate between updating the adjustable parameters of the labelling function to optimize the split of the data and updating the adjustable parameters of the plurality of machine learning models to perform the hidden task/classify the data. The agreement score between two machine learning models may be computed based upon a difference or distance computed between the output of the first model and the output of the second model. This may be combined with any appropriate supervised loss function such as the mean squared error or cross-entropy error to obtain an overall loss function for the optimization. The agreement score may be computed using a held-out validation set or test set.

Referring now to FIG. 8, example operations 800 for labelling the identified existing stored data based upon the one or more hidden tasks will now be described. A first operation 801 may comprise providing a subset of the existing stored data for the one or more hidden tasks to a user for manual labelling. For example, where the task is binary classification, a subset of the data for the first class and a subset of the data for the second class may be selected and provided to the user for manual labelling. The subset of data may be selected on the basis of an active learning model which may determine which of the data items it would be most beneficial to receive labels for. In some embodiments, an active learning model may comprise a graph with nodes representing data items and their labels and weighted edges representing a measure of similarity between nodes. It will be appreciated that other forms of active learning model may be used as deemed appropriate by a person skilled in the art. The data split provided by a hidden task may be used to initialise the active learning model. There may be a plurality of active learning models corresponding to each of the hidden tasks/data splits as appropriate. A measure of uncertainty that a data item is correctly labelled may be used to determine which data items to include in the subset to present to the user. For example, the data items with the lowest confidence may be provided to the user for manual labelling or the data items that would yield the most information gain may be provided to the user for manual labelling.

A second operation 802 may comprise receiving a manual labelling of the subset of the data provided in the first operation 801. A third operation 803 may comprise automatically labelling the remaining identified existing stored data based upon the received manual labelling. For example, the active learning model may be updated using the received manual labelling. The active learning model may use a graph diffusion process to propagate the labels through the graph to update the labelling of each non-manually labelled data item. The process of FIG. 8 may be repeated, for example, until all labels have a threshold confidence or until a fixed number of iterations have been performed to provide a final output labelling. In one example, through the use of active learning, it is sufficient for approximately 20% of the data in each class to be manually labelled to achieve accurate labelling for the remaining data.

In some embodiments, the selected data may be presented to the user at particular opportune moments. These may be determined based upon experience sampling methods to avoid overwhelming the user and to promote user co-operation with the labelling process. For example, when the user is not engaged in physical activity and/or when the user is not engaged in an intensive task on the device. The presentations may also be separated in time. The user may be presented with options for labelling the data on the basis of the labels required for training the machine learning model associated with the new application. Where the user is unable to identify that any of the data splits provided by the hidden tasks correspond to the labels required for training the machine learning model, it may be considered that no suitable stored data exists for training the machine learning model. In these cases, the new application may be granted permission to collect new user data. Where the user is able to identify data corresponding to the required labels, the remaining existing data may be automatically labelled as described above and provided in response to the request by the new application. In some embodiments, the metadata of the identified existing stored data is modified to include the labelling, for example, the file descriptor field of the data item may be modified to include the label of the data item. This additionally promotes reusability of the data and aids in subsequent searches of the data for further applications that are installed.

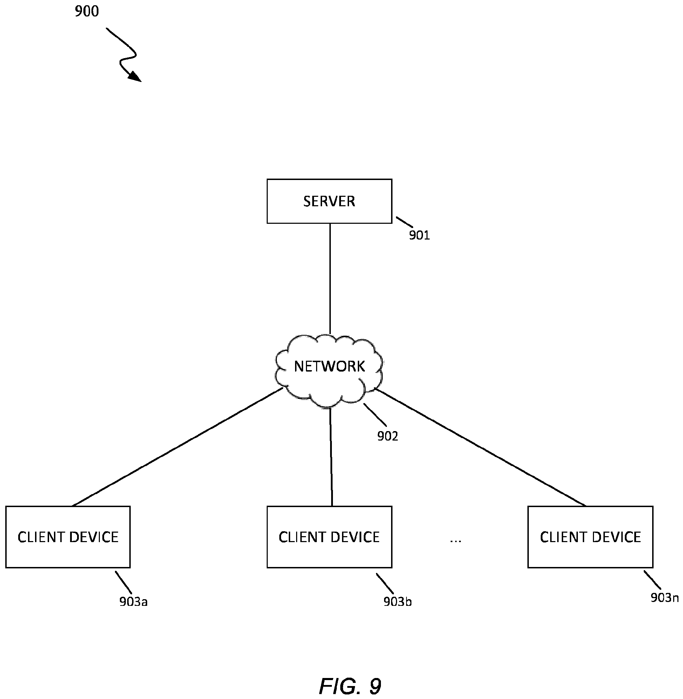

Referring now to FIG. 9, a block diagram of an example federated learning system is shown. Any of the above example embodiments may be used in a federated learning setting. In general, federated learning is a method of training a machine learning model in a distributed manner. The machine learning model may be trained using data stored locally at a plurality of participating devices without the need for that data to be transmitted off the device. Federated learning thus provides anonymity and security for participating devices.

The system 900 may comprise a server 901 connected via a network 902 to a plurality of client devices 903a...n. The client devices 903a...n may be an example of the device 100 of FIG. 1. The server 901 may comprise any suitable form of computing device or system that is capable of communicating with the plurality of client devices 903a...n. The network 902 may comprise any form of data network, such as a wired or wireless network, including, but not limited to, a radio access network (RAN) conforming to 3G, 4G, 5G (Generation) protocols or any future RAN protocol. Alternatively, the network 103 may comprise a Wi-Fi (Wireless Fidelity) network (IEEE 802.11) or similar, other form of local or wide area network (LAN or WAN) or a short-range wireless network utilizing a protocol such as Bluetooth or similar.

The server 901 may be configured to maintain a machine learning model centrally. The server 901 may be configured to transmit a copy of the machine learning model to a client device when requested. Each client device may be configured to train the machine learning model using local data. The client device may be configured to transmit an update to the machine learning model on the basis of the training using local data. The server 901 may be configured to apply the updates received from each client device to the centrally maintained machine learning model. The server 901 may be configured to transmit the updated machine learning model in response to any further requests from client devices. Alternatively, the server 901 may be configured to transmit a copy of the machine learning model accordingly without the need for a request from a client device.

In some cases, client devices 903a...n may need to collect data before it is able to begin the process of training the machine learning model. Using the methods described above with reference to FIGs 1-8, a client device may identify and train the machine learning using existing stored data on the device. In some embodiments, this may be instead of collecting new data, thereby reducing the storage requirements necessary or this may enable the training process to begin earlier without having to wait for the data collection process to finish.

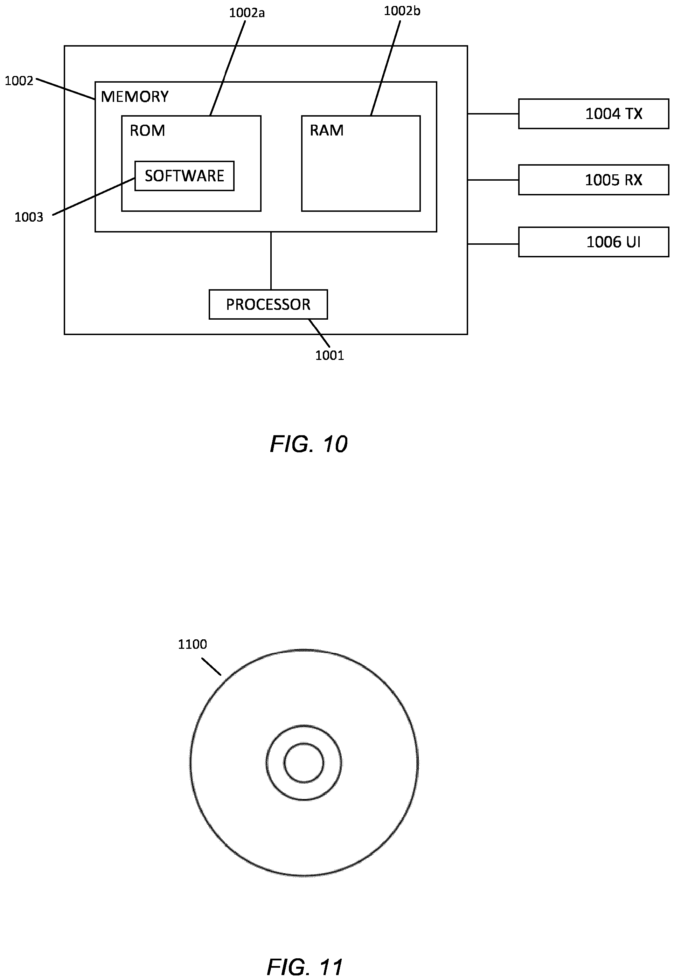

FIG. 10 shows an apparatus according to some example embodiments, which may comprise the device 100. The apparatus may be configured to perform the operations described herein, for example operations described with reference to any disclosed process above. The apparatus comprises at least one processor 1001 and at least one memory 1002 directly or closely connected to the processor. The memory 1002 includes at least one random access memory (RAM) 1002b and at least one read-only memory (ROM) 1002a. Computer program code (software) 1003 is stored in the ROM 1002a. The apparatus may be connected to a transmitter 1004 (TX) and a receiver 1005 (RX). The apparatus may, optionally, be connected with a user interface 1006 (UI) for instructing the apparatus and/or for outputting data. The at least one processor 1001, with the at least one memory 1002 and the computer program code 1003 are arranged to cause the apparatus to at least perform at least the method according to any preceding process, for example as disclosed in relation to the flow diagrams of FIGs. 2 and 3 and 5 to 8 related features thereof. Alternatively or additionally, the apparatus comprises one or more circuits to operate any of disclosed processes above, or any of their parts, as described with reference to the flow diagrams of FIGs. 2 and 3 and 5 to 8 related features thereof.

As used in this application, the term "circuitry" may refer to one or more or all of the following:
(a) hardware-only circuit implementations (such as implementations in only analog and/or digital circuitry) and
(b) combinations of hardware circuits and software, such as (as applicable):
   (i) a combination of analog and/or digital hardware circuit(s) with software/firmware and
   (ii) any portions of hardware processor(s) with software (including digital signal processor(s)), software, and memory(ies) that work together to cause an apparatus, such as a mobile phone or server, to perform various functions) and
I hardware circuit(s) and or processor(s), such as a microprocessor(s) or a portion of a microprocessor(s), that requires software (e.g., firmware) for operation, but the software may not be present when it is not needed for operation."

This definition of circuitry applies to all uses of this term in this application, including in any claims. As a further example, as used in this application, the term circuitry also covers an implementation of merely a hardware circuit or processor (or multiple processors) or portion of a hardware circuit or processor and its (or their) accompanying software and/or firmware. The term circuitry also covers, for example and if applicable to the particular claim element, a baseband integrated circuit or processor integrated circuit for a mobile device or a similar integrated circuit in server, a cellular network device, or other computing or network device.

FIG. 11 shows a non-transitory media 1100 according to some embodiments. The non-transitory media 1100 is a computer readable storage medium. It may be e.g. a CD (Compact Disc), a DVD (Digital Video Disc), a USB (Universal Serial Bus) memory stick, a blue ray disk, etc. The non-transitory media 1100 stores computer program code, causing an apparatus to perform the method of any preceding process for example as disclosed in relation to the flow diagrams and related features thereof.

Names of network elements, protocols, and methods are based on current standards. In other versions or other technologies, the names of these network elements and/or protocols and/or methods may be different, as long as they provide a corresponding functionality. For example, embodiments may be deployed in 2G/3G/4G/5G networks and further generations of 3GPP (3rd Generation Partnership Project) but also in non-3GPP radio networks such as Wi-Fi.

A memory may be volatile or non-volatile. It may be e.g. a RAM, a SRAM (Static Random Access Memory), a flash memory, a FPGA (Field-Programmable Gate Array) block ram, a DVD, a CD, a USB stick, and a blue ray disk.

If not otherwise stated or otherwise made clear from the context, the statement that two entities are different means that they perform different functions. It does not necessarily mean that they are based on different hardware. That is, each of the entities described in the present description may be based on a different hardware, or some or all of the entities may be based on the same hardware. It does not necessarily mean that they are based on different software. That is, each of the entities described in the present description may be based on different software, or some or all of the entities may be based on the same software. Each of the entities described in the present description may be embodied in the cloud.

Implementations of any of the above described blocks, apparatuses, systems, techniques or methods include, as non-limiting examples, implementations as hardware, software, firmware, special purpose circuits or logic, general purpose hardware or controller or other computing devices, or some combination thereof. Some embodiments may be implemented in the cloud.

It is to be understood that what is described above is what is presently considered the preferred embodiments. However, it should be noted that the description of the preferred embodiments is given by way of example only and that various modifications may be made without departing from the scope as defined by the appended claims.

The applicant hereby discloses in isolation each individual feature described herein and any combination of two or more such features, to the extent that such features or combinations are capable of being carried out based on the present specification as a whole, in the light of the common general knowledge of a person skilled in the art, irrespective of whether such features or combinations of features solve any problems disclosed herein, and without limitation to the scope of the claims. The applicant indicates that the disclosed aspects/examples may consist of any such individual feature or combination of features. In view of the foregoing description it will be evident to a person skilled in the art that various modifications may be made within the scope of the disclosure.

As used herein, "at least one of the following: <a list of two or more elements>" and "at least one of <a list of two or more elements>" and similar wording, where the list of two or more elements are joined by "and" or "or", mean at least any one of the elements, or at least any two or more of the elements, or at least all the elements.

While there have been shown and described and pointed out fundamental novel features as applied to examples thereof, it will be understood that various omissions and substitutions and changes in the form and details of the devices and methods described may be made by those skilled in the art without departing from the scope of the disclosure. For example, it is expressly intended that all combinations of those elements and/or method steps which perform substantially the same function in substantially the same way to achieve the same results are within the scope of the disclosure. Moreover, it should be recognized that structures and/or elements and/or method steps shown and/or described in connection with any disclosed form or examples may be incorporated in any other disclosed or described or suggested form or example as a general matter of design choice. Furthermore, in the claims means-plus-function clauses are intended to cover the structures described herein as performing the recited function and not only structural equivalents, but also equivalent structures.

## Claims

1. An apparatus comprising:
means for receiving a request to collect new user data for training a machine learning model associated with an application;
means for identifying existing stored data suitable for training the machine learning model based upon an ontology; and
means for providing access to the identified existing stored data in response to identifying that the data is suitable for training the machine learning model.

2. The apparatus of claim 1, wherein the request further comprises a modality of the new user data and wherein the means for identifying the existing stored data further comprises means for identifying the existing stored data based upon the modality.

3. The apparatus of claim 1 or 2, wherein the request further comprises data indicating one or more labels for training the machine learning model and wherein the means for identifying the existing stored data further comprises:
means for determining one or more terms related to the one or more labels based upon the ontology; and
means for identifying the existing stored data having metadata comprising at least one of the one or more related terms.

4. The apparatus of any preceding claim, further comprising:
means for processing the identified existing stored data to enhance the suitability of the existing stored data for training the machine learning model; and wherein the means for providing access to the identified existing stored data comprises means for providing access to a processed version of the existing stored data.

5. The apparatus of claim 4, wherein the means for processing the identified existing stored data comprises means for applying signal processing to the identified existing stored data.

6. The apparatus of any preceding claim, further comprising:
means for generating labels for the identified existing stored data for training the machine learning model associated with the application.

7. The apparatus of claim 6, wherein the means for generating labels comprises:
means for generating one or more hidden tasks from the identified existing stored data; and
means for labelling the identified existing stored data based upon the one or more hidden tasks.

8. The apparatus of claim 7, wherein the means for generating the one or more hidden tasks from the identified existing stored data comprises means for generating the one or more hidden tasks from the identified existing stored data based upon optimizing a labelling function and a plurality of machine learning models configured to perform a hidden task, the optimization based upon an agreement score between the output of the plurality of machine learning models when performing the hidden task.

9. The apparatus of claim 8, wherein the plurality of machine learning models have the same architecture but different starting parameter values.

10. The apparatus of any one of claims 7 to 9, wherein a hidden task is a random classification task.

11. The apparatus of any one of claims 7 to 10, wherein the means for labelling the identified existing stored data based upon the one or more hidden tasks comprises means for labelling the existing stored data based upon an active learning model.

12. The apparatus of any one of claims 7 to 11, wherein the means for labelling the identified existing stored data based upon the one or more hidden tasks comprises at least one of the following:
means for providing a subset of the existing stored data for the one or more hidden tasks to a user for manual labelling;
means for receiving a manual labelling of the subset of the existing stored data from a user; or
means for automatically labelling the remaining existing stored data based upon the received manual labelling.

13. The apparatus of any preceding claim, further comprising:
means for modifying the metadata of the identified existing stored data to indicate re-usability of the data for training machine learning models.

14. A computer-implemented method comprising:
receiving, by an apparatus, a request from an application to collect new user data for training a machine learning model associated with the application;
identifying, by the apparatus, existing stored data suitable for training the machine learning model based upon an ontology; and
providing, by the apparatus, access to the identified existing stored data in response to the request by the application.

15. A computer program comprising instructions which, when executed by an apparatus, cause the apparatus to perform at least the following:
receiving, by the apparatus, a request from an application to collect new user data for training a machine learning model associated with the application;
identifying, by the apparatus, existing stored data suitable for training the machine learning model based upon an ontology; and
providing, by the apparatus, access to the identified existing stored data in response to the request by the application.
